(19) Europäisches Patentamt
European Patent Office
Office européen des brevets

(11) Publication number: 0 159 053
A1

(12) EUROPEAN PATENT APPLICATION

(21) Application number: 85200302.9

(22) Date of filing: 04.03.85

(51) Int. Cl.[4]: C 08 G 18/42
C 08 G 18/60, C 09 J 3/16

(30) Priority: 06.03.84 NL 8400719

(43) Date of publication of application:
23.10.85 Bulletin 85/43

(84) Designated Contracting States:
BE DE FR GB IT NL

(71) Applicant: AKZO N.V.
Velperweg 76
NL-6824 BM Arnhem(NL)

(72) Inventor: Brouwer, Anton Hendrikus Johannes
Prins Bernhardweg 3A
NL-6862 HR Oosterbeek(NL)

(74) Representative: Sieders, René et al,
P.O. Box 314
NL-6800 AH Arnhem(NL)

(54) **Polyester-ester urethane.**

(57) The invention relates to polyester-ester urethanes containing 5 to 60% by weight of blocks of ester units of a high-melting polyester and 95 to 40% by weight of blocks of ester units of a low-melting polyester which are linked together through ester groups and/or urethane groups. The melting-point of the polyester-ester urethane is at least 80°C, the melting heat of the polyester segments is not higher than 35 joule/g polyester-ester urethane, the upper limit of the glass transition range [$Tg_{(e)}$] of the low-melting polyester segment is below −5°C, and the melting point of the polyester-ester urethane does not exceed + 150°C when the high-melting polyester units form 20 to 60% by weight of the polyester-ester. The polyester-ester urethanes are prepared by reacting a high-melting polyester and a low-melting polyester in the molten phase, after which the resulting polyester-ester is reacted with a low molecular weight polyisocyanate. The present polyester-ester urethanes are suitable to be applied in adhesive formulations.

EP 0 159 053 A1

Polyester-ester urethane

The invention relates to a polyester-ester urethane built up of polyester-ester units which are linked together by low molecular weight structural units of the formula

$$R_1[NH\overset{\overset{O}{\|}}{C}]-_p,$$

wherein $R_1$ represents a polyfunctional organic group having not more than 30 carbon atoms, and p is an integer of 2 or 3, which polyester-ester units are built up of blocks comprising a multiple of ester units of the formula

$$-OGO\overset{\overset{O}{\|}}{C}R_2\overset{\overset{O}{\|}}{C}-$$

and blocks comprising a multiple of ester units which may form a bifunctional polyester or polyester amide having a melting point not higher than 100°C, which two types of polyester units are linked together by ester bonds, with the proviso that:
at least 80 mole % of the G groups in the latter formula are tetramethylene radicals and the remaining proportion thereof are divalent radicals after removal of hydroxyl groups from a low molecular weight diol having a molecular weight not higher than 250;
at least 80 mole % of the $R_2$ groups are 1,4-phenylene radicals and the remaining proportion thereof are divalent radicals left after removal of carboxyl groups from a low molecular weight dicarboxylic acid having a molecular weight not higher than 300; and the sum of the percentages of G groups which are not tetramethylene radicals and of the percentage of $R_2$ groups which are not 1,4-phenylene radicals does not exceed 20;
and to methods for the preparation of such a polyester-ester urethane.
The preparation of polyester-ester urethanes of the type indicated above is described in U.S. Patent Specification 4 186 257. According to the known process a low molecular weight polyisocyanate is reacted with a block copolymer containing isocyanate-reactive hydrogen atoms. As block copolymers there may be used, copolyether esters and copolyester-esters.
The preparation of copolyether esters is described in, among other publications, U.S. Patent Specifications 3 023 192 and 3 849 515.

According to the examples in the afore-mentioned U.S. Patent Specification 4 186 257 the preparation of polyester-esters is attended with a high degree of transesterification, which results in finally obtaining a polyurethane having a greatly reduced melting point and a very much increased upper limit of the glass transition range [$Tg_{(e)}$] of the low-melting polyester segment.

Due to these properties the polyester-ester urethanes prepared by the method described in the last-mentioned United States Patent Specification are less suitable for use in adhesives that are to be applied hot in the molten state or for the preparation of pressure-sensitive glue compositions.

The present invention provides a polyester-ester urethane having greatly improved properties.

The invention consists in that in a polyester-ester urethane of the type indicated above as known the ester units of the formula

$$\begin{array}{c} \quad O \;\; O \\ \quad \| \;\;\; \| \\ -OGOCR_2C- \end{array}$$

form 5 to 60% by weight of the polyester-ester, and the number of interlinked ester units of the formula

$$\begin{array}{c} \quad O \;\; O \\ \quad \| \;\;\; \| \\ -OGOCR_2C- \end{array}$$

and the number of other ester units interlinked to form a bifunctional polyester or polyester amide are such that at a load of 500 g and a bonding area of 1,5 $cm^2$ on a standard stainless steel plate of AFERA® the softening point determined in accordance with ASTM D 816 is at least 75°C, the melting heat of the polyester segments in the polyester-ester urethane is not higher than 35 joule/g polyester-ester urethane, and the upper limit of the glass transition range [$Tg_{(e)}$] of the low-melting polyester block is below -5°C, and the melting point of the polyester-ester urethane when the ester units of the formula

$$\begin{array}{c} \quad O \;\; O \\ \quad \| \;\;\; \| \\ -OGOCR_2C- \end{array}$$

form 20 to 60% by weight of the polyester-ester is in the range of 80° to 150°C and when they form less than 20% by weight of the polyester-ester it is at least 80°C.

Surprisingly, it has been found that the polyester-ester urethanes according to the invention are excellently suitable to be used in adhesives that are applied hot in the molten state or are to be incorporated into pressure sensitive glue compositions.
It should be added that polyester-ester urethanes of the same type are the subject of previously filed, non-prepublished European Patent Application 102 115. The polyester segments of the polyester-ester urethanes claimed in it always have a melting heat of over 35 joule/g polyester-ester urethane, which makes them very suitable to be processed by extrusion or injection moulding but less suitable for use in adhesives to be applied hot in the molten state or in pressure-sensitive glue compositions. Moreover, the melting point of the polyester-ester urethanes claimed in it is at least 150°C.
The polyester-ester urethanes of the present invention can be used as such or in combination with a low molecular weight thermoplastic resin which forms a mixture compatible with the polyester-ester urethane, displays thermal stability at 150°C and has a melt viscosity of less than 10.000 cp at 200°C. It should be added that the use for this purpose of block copolyesters is not novel. U.S. Patent Specification 3 832 314, for instance, describes the use of copolyether esters in combination with a low molecular weight thermoplastic resin; and in U.S. Patent Specification 4 122 073 use is made of copolyesters in which there is incorporated a succinic acid substituted with an alkyl group or alkenyl group or the anhydride thereof. Although with the adhesive compositions based on these well-known copolyesters satisfactory results may be obtained, it has been found that the polyester-ester urethanes according to the invention make it possible to obtain adhesive compositions that compare favourably with the well-known compositions in that they display a high bonding strength coupled with a low melt viscosity and a high melt stability, particularly upon exposure of the melt to atmospheric oxygen.

According to the invention it is preferred that use should be made of a polyester-ester urethane for which the upper limit of the glass transition range [$Tg_{(e)}$] of the low-melting polyester segment is -10°C.

It has been found that generally a polyester-ester urethane with favourable properties is obtained when the proportion of low molecular weight structural units of the formula

$$R_1[NH\overset{\overset{O}{\|}}{C}]-_p,$$

calculated as diphenyl methane-4,4'diisocyanate and based on the polyester-ester urethane is in the range of 0,5 to 12,5% by weight.
It is preferred that use should be made of a polyester-ester urethane in which the percentage by weight of the low molecular weight structural units is in the range of 1 to 10.
At least 80 mole % of the low molecular weight diol and at least 80 mole % of the low molecular weight dicarboxylic acid from which the ester units of the formula

$$-OGO\overset{\overset{O}{\|}}{C}R_2\overset{\overset{O}{\|}}{C}-$$

are derived are formed by 1,4-butane diol and terephthalic acid, respectively.

Included among suitable diols (other than 1,4-butanediol) having a molecular weight not exceeding 250 are acyclic, alicyclic and aromatic dihydroxy compounds.
Preferred are diols with 2-15, and particularly 5-10 carbon atoms such as ethylene glycol, propylene glycol, isobutylene glycol, pentamethylene glycol, 2,2-dimethyltrimethylene glycol, hexamethylene glycol, and decamethylene glycol, dihydroxy cyclohexane, dimethanol cyclohexane, resorcinol, hydroquinone and 1,5-dihydroxy naphthalene.
Especially preferred are aliphatic diols containing 2-8 carbon atoms. Included among the bis-phenols which can be used are bis(p-hydroxy)diphenyl, bis(p-hydroxyphenyl)methane and bis(p-hydroxyphenyl)propane.
Suitable dicarboxylic acids (other than terephthalic acid) having a molecular weight not exceeding 300 are aliphatic, cycloaliphatic or aromatic dicarboxylic acids.
The term aliphatic dicarboxylic acids as used in the description of the invention refers to carboxylic acids having two carboxyl groups which are each attached to a saturated carbon atom. If the carbon atom to which the

carboxyl group is attached is saturated and is in a ring, the acid is cycloaliphatic. Aliphatic or cycloaliphatic acids having conjugated unsaturation often cannot be used because of homopolymerization. However, some unsaturated acids such as maleic acid can be used.

Aromatic dicarboxylic acids, as the term is used herein, are dicarboxylic acids having two carboxyl groups attached to carbon atoms in an isolated or fused benzene ring. It is not necessary that both functional carboxyl groups be attached to the same aromatic ring and where more than one ring is present, they can be joined by aliphatic or aromatic divalent radicals such as -O- or $-SO_2-$.

Representative aliphatic and cycloaliphatic acids which can be used for this invention are sebacic acid, 1,3-cyclohexane dicarboxylic acid, 1,4-cyclohexane dicarboxylic acid, adipic acid, glutaric acid, succinic acid, carbonic acid, oxalic acid, azelaic acid, diethyl-malonic acid, allyl-malonic acid, 4-cyclohexane-1,2-dicarboxylic acid, α,α'-β.β'-tetramethylsuccinic acid, cyclopentanedicarboxylic acid, decahydro-1,5-naphthalene dicarboxylic acid, 4,4'-bicyclohexyl dicarboxylic acid, decahydro-2,6-naphthalene dicarboxylic acid, 4,4'-methylene-bis-(cyclohexyl carboxylic acid), 3,4-furan dicarboxylic acid and 1,1-cyclobutane dicarboxylic acid. Preferred aliphatic and cycloaliphatic acids are cyclohexane-dicarboxylic acids and adipic acid.

Representative aromatic dicarboxylic acids which can be used include phthalic and isophthalic acids, bibenzoic acids, substituted dicarboxy compounds with two benzene nuclei such as bis(p-carboxyphenyl)methane, p-oxy-(p-carboxyphenyl)benzoic acid, ethylene-bis(p-oxybenzoic acid), 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, and $C_1$-$C_{12}$ alkyl and/or ring substitution derivatives thereof, such as halo, alkoxy and/or aryl derivatives. Hydroxyl acids such as p(β-hydroxyethoxy)benzoic acid can also be used, providing an aromatic dicarboxylic acid is also present.

Aromatic dicarboxylic acids are a preferred class for preparing the ester units of the formula

$$-OGO\overset{\overset{O}{\|}}{C}R_2\overset{\overset{O}{\|}}{C}-$$

Among the aromatic acids, those with 8-16 carbon atoms are preferred, particularly the phenylene dicarboxylic acids, i.e., phthalic and isophthalic acids.

In view of the melting point and the relatively high crystallization or curing rate of the polyester-ester urethane it is preferred that the ester units of the formula

$$-OGO\overset{O}{\overset{\|}{C}}R_2\overset{O}{\overset{\|}{C}}-$$

should entirely or substantially be derived from butylene terephthalate units.

The procedure for preparing the low-melting polyesters or polyester amides is known per se and similar to that used for preparing high melting polyesters. It may be realized for instance by polycondensation of polyfunctional, preferably bifunctional alcohols, amino alcohols, hydroxycarboxylic acids, lactones, aminocarboxylic acids, cyclic carbonates or polycarboxylic acids. By a proper choice of the mixing ratio of the above-mentioned components any desirable molecular weight and number and type of terminal groups may be obtained.

As examples may be mentioned polyesters from adipic acid and ethylene glycol, butanediol, pentanediol, hexanediol, mixtures of ethylene glycol and propylene glycol, hexanediol and methylhexanediol, hexanediol and 2,2-dimethyl-1,3-propanediol, hexanediol, butanediol or pentanediol or polyester amides from hexanediol and piperazine. Also other glycols, such as 1,3- or 1,4-cyclohexanediol or 1,3- or 1,4-bis(hydroxymethyl)-cyclohexane, amino alcohols such as amino ethanol or amino propanol may be incorporated into the low melting components.

The low-melting components also may entirely or partly be composed of lactones such as substituted or unsubstituted caprolactone or butyrolactone.

Under some circumstances, for instance to increase the melt viscosity of the endproduct, it may be recommended to incorporate some small amount of higher functional compounds. As examples of such compounds may be mentioned trimethylol ethane, trimethylol propane or hexane triol. The low-melting bifunctional components may also be derived from the following acids: glutaric acid, pimelic acid, suberic acid, isosebacic acid or ricinoleic acid. Also aliphatic dicarboxylic acids having hetero atoms, such as thiodipropionic acid may be used in the low-melting bifunctional compounds. In addition there still may be mentioned cycloaliphatic dicarboxylic acids such as 1,3- or 1,4-cyclohexane dicarboxylic acid and terephthalic acid and isophthalic acid.

For an essentially better resistance to hvdrolysis preference is given to polyesters of which the constituents each consist of at least 5 carbon atoms.

As examples may be mentioned adipic acid and 2,2-dimethyl propanediol or mixtures of 1,6-hexanediol and 2,2-dimethyl propanediol or 2-methyl-1,6-hexanediol. In addition to the low-melting polyesters or polyester amides some other low-melting bifunctional compounds may to a limited extent be incorporated into the segmented thermoplastic elastomers according to the invention. As examples may be mentioned polyalkylene glycol ethers having terminal hydroxyl groups as obtained by reaction with water, diamines, di-or trifunctional alcohols or amino alcohols.

Special mention is made here of polytetrahydrofuran obtained by polymerization of tetrahydrofuran in the presence of acid catalysts or copolymers thereof with small amounts of ethylene oxide and/or propylene oxide.

The essential advantages of the present invention, such as a very good resistance to UV light will be manifest only upon exclusive use of polyesters and/or polyester amides, which are therefore preferred. A limited percentage of, for instance, polyethylene oxide glycol may be of use for improving physical properties, such as swelling in oil.

Both in view of its being readily obtainable and of other properties of the final elastomer preference is given to a polyester-ester urethane whose ester units that may form a bifunctional polyester or polyester amide having a melting point not higher than 100°C are entirely or substantially derived from polybutylene adipate.

A polyester-ester urethane having very good properties is also obtained when the ester units that may form a bifunctional polyester or polyester amide having a melting point not higher than 100°C are entirely or substantially derived from polycaprolactone. Preference, however, is given to a polyester-ester urethane in which the ester units which may form a bifunctional polyester or polyester amide with a melting point not higher than 100°C are derived from a random copolymer of 40 to 60 parts of polyethylene adipate and 60 to 40 parts of polybutylene adipate.

The low molecular weight structural units of the formula

$$R_1[NH\overset{\overset{O}{\|}}{C}]-_p$$

which may be used according to the invention are derived from di- and triisocyanates.

The diisocyanates may be represented by the general formula OCNRNCO, wherein R represents a divalent, aliphatic, alicyclic or aromatic group.
Examples of suitable diisocyanates of the aliphatic type are: hexamethylene diisocyanate, dimethyl hexamethylene diisocyanate, trimethyl hexamethylene diisocyanate, metaxylylene diisocyanate, paraxylylene diisocyanate, tetramethylene diisocyanate.
When R represents an aromatic group, it may be substituted for instance with a halogen, a lower alkyl or a lower alkoxy group.
Examples of these diisocyanates include: 1-chloro-2,4-phenylene diisocyanate, 2,4-toluene diisocyanate, a mixture of 2,4-toluene and 2,6-toluene diisocyanate, tetramethylphenylene diisocyanate, diphenylmethane-4,4'-diisocyanate, metaphenylene diisocyanate, paraphenylene diisocyanate, naphthalene-1,5-diisocyanate, diphenyl-4,4'-diisocyanate, biphenylmethane-4,4'-diisocyanate, biphenyldimethylmethane-4,4'-diisocyanate, benzophenone-4,4'-diisocyanate, biphenylether diisocyanate and biphenylsulphide diisocyanate, 3,3'-dimethyldiphenyl-4,4'-diisocyanate, 3,3'-dimethoxydiphenyl-4,4'-diisocyanate, 3,3'-dichlorodiphenyl-4,4'-diisocyanate, benzofuran-2,7-diisocyanate.
Examples of diisocyanates having an alicyclic group include isophoron diisocyanate, dicyclohexylmethane diisocyanate and 1,4-cyclohexane diisocyanate.
It has been found that optimum properties are generally obtained if the ratio of the number of -NCO groups of the diisocyanate to the number of functional groups of the block polyester-ester is in the range of 1,1 to 1,5.
Both with a view to the properties of the end product and simplicity of preparation preference is given according to the invention to polyester-esters having hydroxyl end groups.
The invention also relates to processes for the preparation of a polyester-ester urethane of the known type indicated in the opening paragraph, with the ester units of the formula

$$-OGO\overset{O}{\overset{\|}{C}}R_2\overset{O}{\overset{\|}{C}}-$$

form 5 to 60% by weight of the polyester-ester and the number of interlinked ester units of the formula

$$-OGO\overset{O}{\overset{\|}{C}}R_2\overset{O}{\overset{\|}{C}}-$$

and the number of other ester units interlinked to form a bifunctional polyester or polyester amide are such that at a load of 500 g and a bonding area of 1,5 $cm^2$ on a standard stainless steel plate of AFERA® the softening point determined in accordance with ASTM D 816 is at least 75°C, the melting heat of the polyester segments in the polyester-ester urethane is not higher than 35 joule/g polyester-ester urethane, and the upper limit of the glass transition range [$Tg_{(e)}$] of the low-melting polyester segment is below -5°C, and the melting point of the polyester-ester urethane when the ester units of the formula

$$-OGO\overset{O}{\overset{\|}{C}}R_2\overset{O}{\overset{\|}{C}}-$$

from 20 to 60% by weight of the polyester is in the range of 80° to 150°C and when they form less than 20% by weight it is at least 80°C.

In one process of the type known from the previously mentioned US Patent Specification 4 186 257 a bifunctional polyester having a molecular weight of at least 1000 and built up of ester units of the formula

$$-OGO\overset{O}{\overset{\|}{C}}R_2\overset{O}{\overset{\|}{C}}-$$

wherein both G and $R_2$ have the same meaning as indicated before, is reacted, while in the molten phase, with a bifunctional polyester or polyester amide having a molecular weight of at least 1500 and a melting point not higher than 100°C, after which the resulting polyester-ester is reacted with a low molecular weight coupling agent of the formula $R_1[NCO]_p$, wherein $R_1$ and p have the afore-indicated meaning, in an amount such that the ratio of the number of -NCO groups to the number of functional groups of the polyester-ester is at least 1,0 and not higher than 5, characterized in that before and/or during the preparation of the polyester-ester the transesterification catalyst present in one or in both polyesters or polyesteramides is entirely or partly deactivated.

When use is made of a mixture of polyesters or polyester amides together having more than 700 meq end groups per kg the transesterification catalyst will have to be deactivated almost entirely in order to obtain a polyester-ester urethane according to the invention.

On the other hand, if the preparation is started from a mixture of polyester or polyester amides having fewer than 700 meq end groups per kg, particularly if use is made of starting products having a relatively high molecular weight, then only partial deactivation will within a particular space of time lead to an optimally transesterified block polyester-ester.

At a given weight ratio of polyesters having a particular molecular weight (meq end groups per kg) it will not be difficult for a man skilled in the art to choose the most favourable conditions which lead to a copolyester-ester urethane having optimum properties.

The present process is advantageously started from a low-melting bifunctional polyester or polyester amide having a molecular weight of 1500 to 2500 and a high-melting polyester of the formula

$$-OGO\overset{O}{\overset{\|}{C}}R_2\overset{O}{\overset{\|}{C}}-$$

having a molecular weight in the range of 10 000 to 25 000.

Preference is given then to the use of a high-melting polyester which entirely or substantially consists of polybutylene terephthalate having a molecular weight in the range of 15 000 to 19 000.

When, however, use is made of a high-melting polyester having a molecular weight in the range of 1500 to 3000, preference is given to its use in combination with a low-melting polyester or polyester amide having a molecular weight in the range of 10 000 to 20 000.

For the purpose of transesterification in the preparation of the polyester use is generally made of a titanium catalyst or a calcium salt, a manganese salt and/or a zinc salt. These salts may be deactivated by adding precipitating or complexing agents.

Deactivation also may be carried out by applying a thermal treatment. It has been found, for instance, that when the catalyst used is zinc acetate, it may be deactivated by heating to a temperature of at least 200°C. Favourable results are particularly found to be obtained when use is made of complexing phosphorus compounds, which are also suitable to be used as stabilizers in polyesters.

In this connection reference is made to the phosphites and thiophosphites which are described in United States Patent Specification 3 039 993, and to the phosphates, phosphonates, phosphonic acids and phosphinic acids of the following structural formulae:

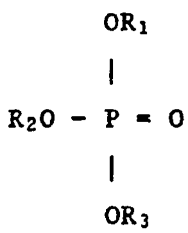,
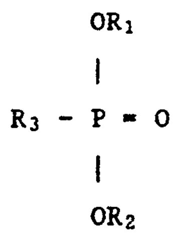,
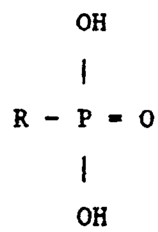
and
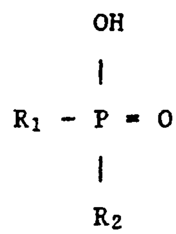

phosphate    phosphonate    phosphonic acid    phosphinic acid

wherein R, $R_1$, $R_2$ and $R_3$ may be the same or different and represent a hydrogen atom or a substituted or unsubstituted organic group. Examples of suitable substituents are a lower alkyl group, cycloalkyl group, alkoxy group, cycloalkoxy group, hydroxyl group and/or a halogen atom. If R, $R_1$, $R_2$ and $R_3$ represent an organic group, they generally do not contain more than 30, and preferably not more than 18 carbon atoms. As examples may be mentioned alkyl, cycloalkyl, carboalkoxy alkyl, aryl, aralkyl and aroxy alkyl.
As examples of phosphorus compounds that are excellently suitable to be used for the present purpose may be mentioned: triphenyl phosphate, triphenyl phosphite, triethyl phosphite, tricyclohexyl phosphite, tri-2-ethylhexyl trithiophosphite, trieicosyl phosphite, tri-o-chlorophenyl phosphite, 2-carbomethoxyethyl dimethyl phosphonate, hydroxymethyl phosphonic acid, diphenyl phosphinic acid, carboxymethyl phosphonic acid, carbethoxymethyl phosphonic acid, carboxyethyl phosphonic acid, tris(triethylene glycol) phosphate and more particularly carbethoxymethyl diethyl phosphonate and tri-p-tert. butylphenyl phosphite.
Favourable results are also obtained by using phosphorus compounds of the formula:

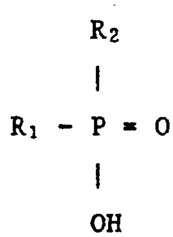,

wherein $R_1$ and $R_2$ may be the same or different and represent a hydrogen atom or an alkyl, cycloalkyl, aralkyl or aryl group each having not more than 20 carbon atoms, or the group $OR_3$, wherein $R_3$ represents a metal or ammonium or the same group or the same atom as $R_1$, irrespective of the meaning of $R_1$.
Examples of suitable phosphorus compounds include the inorganic acids such as orthophosphoric acid, phosphorous acid or hypophosphorous acid; phosphinic acid such as methyl phosphinic acid, ethyl phosphinic acid, isobutyl phosphinic acid, benzyl phosphinic acid, phenyl phosphinic acid, cyclohexyl phosphinic acid or 4-methylphenyl phosphinic acid; phosphonic acids such as methyl phosphonic acid, ethyl phosphonic acid, isopropyl phosphonic acid, isobutyl phosphonic acid, benzyl phosphonic acid, phenyl phosphonic acid, cyclohexyl phosphonic acid, or 4-methylphenyl phosphonic acid; the partial esters of said acids, more particularly the $C_{1-20}$ alkyl, cycloalkyl, aryl or aralkyl esters, such as the methyl, ethyl, propyl, cyclohexyl, phenyl or benzyl esters; the partial metal salts of these acids, of which particularly the metals of the groups I and II of the periodic system, such as sodium, potassium, calcium or magnesium; and the partial ammonium salts of these acids.
When use has been made of a salt of calcium, manganese and/or zinc as transesterification catalyst, care should be taken that no antimony oxide is used as polycondensation catalyst. For in that case the salts can hardly, if at all, be deactivated before and/or during the transesterification reaction.

It is generally desirable that the phosphorus compound used for deactivation corresponds to at least 0,5 phosphorus atoms per metal atom of the transesterification catalyst.
Favourable results are as a rule obtained when the amount of phosphorus compounds used for deactivation corresponds to 1 to 15 phosphorus atoms per metal atom, preference being given to using 1 to 5 phosphorus atoms per metal atom.

According to the present invention it is preferred that use should be made of polyesters and/or polyester amides prepared in the presence of a catalytic amount of a titanium catalyst. The advantage of a titanium catalyst is not only its high reactivity, but especially the ease with which it can be deactivated.

Examples of suitable titanium catalysts include esters of titanium acid and the neutralized products thereof, hydrogenated hexa-alkoxy titanates of magnesium, titanyl oxalates, titanium halides, hydrolysed products of titanium halides, titanium hydroxide and titanium oxide hydrate and potassium titanium fluoride ($K_2TiF_6$).
Preference is given to alkyl titanates such as tetramethyl titanate, tetraethyl titanate, tetrapropyl titanate or tetrabutyl titanate, the neutralized products thereof, the hydrogenated magnesium hexa-alkoxy titanates, such as hydrogenated magnesium hexabutoxy titanate Mg $(HTi[OC_4H_9]_6)_2$, titanyl oxalate, calcium titanyl oxalate, titanium tetrachloride, the reaction product of titanium tetrachloride and hexane diol and the reaction mixture of titanium tetrachloride and water. Said titanium catalysts are used alone or in combination with magnesium acetate or calcium acetate. Inorganic titanates such as lanthanum titanate, calcium acetate/antimony trioxide mixtures and lithium alkoxides and magnesium alkoxides are examples of other suitable catalysts. The amount in which they are to be incorporated generally ranges from 0,005 to 0,3% by weight, calculated on the components taking part in the reaction. For a man skilled in the art it will not be difficult to decide on the amount of catalyst to be used for a given system.

Many of the low-melting polyesters or polyester amides that may be used according to the invention are commercially available. Applicant has found that they contain no or hardly any transesterification promoting catalyst. When the deactivating compound is a phosphorus compound, the results obtained are generally satisfactory if the phosphorus compound is incorporated into the high-melting polyester prior to the reaction process and the mixture is kept in the molten state for at least 5 minutes. It has been found that satisfactory results are generally obtained when the high-melting polyester containing the phosphorus compound is in the molten phase for a period of 30 to 60 minutes.
The polyester-esters to be used according to the invention are usually prepared at a temperature ranging between the melting point of the highest-melting component and 260°C.
An alternative procedure according to the invention for obtaining a polyester-ester urethane in which the ester units of the formula

$$-OGO\overset{O}{\overset{\|}{C}}R_2\overset{O}{\overset{\|}{C}}-$$

form 20 to 60% by weight of the polyester-ester may be using a process known from the above-mentioned U.S. Patent Specification 4 186 257 in which a bifunctional polyester having a molecular weight of at least 1000 and built up of ester units of the formula

$$-OGO\overset{O}{\overset{\|}{C}}R_2\overset{O}{\overset{\|}{C}}-$$

wherein both G and $R_2$ have the same meaning as indicated before, is reacted, while in the molten phase, with a bifunctional polyester or polyester amide having a molecular weight of at least 1000 and a melting point not higher than 100°C, after which the resulting polyester-ester is reacted with a low molecular weight coupling agent of the formula $R_1[NCO]_p$, wherein $R_1$ and p have the afore-indicated meaning, in an amount such that the ratio of the number of -NCO groups to the number of functional groups of the polyester-ester is at least 1,0 and not higher than 5,and steps are taken to ensure that the number of end groups of the high-melting polyester and of the low-melting polyester added together is higher than 700 meq, but not higher than 1000 meq per kg.

Particularly favourable results are obtained when the number of end groups of the high-melting polyester and of the low-melting polyester added together is chosen between 750 and 850 meq per kg.
Alternatively, the preparation of a polyester-ester urethane according to the invention in which the ester units of the formula

$$-OGO\overset{O}{\overset{\|}{C}}R_2\overset{O}{\overset{\|}{C}}-$$

form 5 to less than 20% by weight of the polyester-ester may be so carried out that in a process of the afore-mentioned US Patent Specification 4 186 257, in which from the melt a bifunctional polyester of a molecular weight of at least 1000, built up of ester units of the formula

$$-OGO\overset{O}{\overset{\|}{C}}R_2\overset{O}{\overset{\|}{C}}-$$

wherein G and $R_2$ have the same meaning as given hereinbefore, is reacted with a bifunctional polyester or polyester amide of a molecular weight of at least 1000 and a melting point not higher than 100°C, after which the resulting polyester-ester is reacted with a low molecular weight coupling agent of the formula $R_1[NCO]_p$, wherein $R_1$ and p have the afore-indicated meaning, in an amount such that the ratio of the number of -NCO groups to the number of functional groups of the polyester-ester is at least 1,0 and not higher than 5, and steps are taken to ensure that the number of end groups of the high-melting polyester and of the low-melting polyester added together is higher than 150 meq, but not higher than 1000 meq per kg.

Surprisingly, it has been found that under the process conditions when use is made of a mixture of a high-melting polyester and a low-melting polyester or polyester amide having a total number of end groups not higher than 700 meq per kg there is no longer any need for deactivation.

The advantage of the last-mentioned process especially consists in that the amount of polyisocyanate to be used may be reduced to a minimum.

Thus, when use is made of a polyester mixture containing 200 meq end groups per kg, the amount of diisocyanate calculated as MDI need only as high as 2,8% by weight in the case of an NCO/OH ratio of 1,1.

The length of time the high-melting polyester or polyester amide must react with each other to give an optimally transesterified block polyester-ester depends, in part, on the number of meq end groups per kg, the amount of transesterification catalyst and the composition of the polyesters used.

It has been found that under some circumstances the resistance to hydrolysis of the elastomers prepared by the present process is not satisfactory.

According to the invention this situation may be met by the incorporation preferably into the ready product of some stabilizing amount of polycarbodiimide. The amount to be incorporated is entirely in accordance with the provision described in Netherlands Patent Application 6 907 958 for the stabilization of polyethylene terephthalate.

Another suitable solution to improving the resistance to hydrolysis is the incorporation of 0,5 to 5 percent by weight, calculated on the elastomer of high molecular weight silicone compounds having -OH, $-NH_2$ and/or -COOH end groups.

The thermoplastic elastomers obtained by the processes of the present invention are excellently suitable for use in adhesives that are to be applied hot in the molten state or for use in pressure sensitive glue compositions.

Under some circumstances, particularly in the event of use in pressure sensitive adhesive compositions, the polyester-ester urethanes according to the invention are advantageously mixed with one or more low molecular weight thermoplastic resins which form compatible mixtures with the polyester-ester urethanes, are stable at about 150°C, and have a melt viscosity of less than about 10.000 cp at 200°C. The term thermoplastic resin refers to natural or synthetic resins or materials of a waxy type that soften upon being heated. Examples of resins that are suitable to be mixed with the polyester-ester urethanes according to the invention are described in Kirk-Othmer "Encyclopedia of Chemical Technology", 2nd Edition, 1966, Interscience Publishers, New York, Vol. 11, pp. 242-255, Vol. 15, pp. 176-207 and Vol. 17, pp. 475-505.
The amount of thermoplastic resin to be incorporated in the adhesive compositions ranges from 1 to 99% by weight, preference being given to an amount in the range of 25 to 75% by weight.

The invention will be further described in the following examples. They are, however, not to be construed as being limiting in any manner whatsoever.
For the determination of the properties of the polymers prepared as described in these examples use was made of the following methods:
A Du Pont Thermal Analyzer was employed for determining:

$Tg$ = the temperature range within which the glass transition of the soft segment takes place;

$Tg_{(e)}$ = the upper limit of the glass transition range (Tg) of the low-melting polyester segment, determined by the point of intersection of the tangents to the DSC curve (determined at a scanning speed of 16°C/minute);

$Tm_p$ = temperature at melting peak(s);

$S_{(p)}$ = the softening point, for the determination of which an aluminium strip having a width of 1,5 cm is applied to a standard stainless steel plate of AFERA® in confirmity with ASTM D 816 from a 100µm thick melt. Under a load of 500 g the aluminium strip was heated.

$P_{(s)}$ = the peel strength by ASTM D 903; while in the molten state a 100μm thick layer of the adhesive composition is applied between two aluminium foils. After conditioning for 48 hours the foils are separated from each other at an angle of 180° and at a rate of 100 mm per minute. The peel strength is expressed in N/cm.

ΔH = the melting heat of the polyester segments in the polyester-ester urethane was determined at a scanning speed of 16°C/minute, using a Differential Scanning Calorimeter. The samples were subjected to programmed heating from -100°C to 250°C. The melting heat is expressed in joule per gramme of polyester-ester urethane.

IS = intrinsic strenght

$$= BS \times \frac{BR + 100}{100} \quad [\text{in mPa}]$$

were BS = breaking strength (in mPa)
and BR = elongation at break (in %).

The measured temperatures are expressed in °C.

Comparative Example

Use being made of the same procedure as described in Example 13 of United States Patent Specification 4 186 257, polybutylene terephthalate (PBTP) having a molecular weight of 1500 was prepared by transesterification of dimethyl terephthalate in the presence of an excess of 1,4-butane diol and 420 ppm of tetrabutyl titanate as catalyst.

The polybutylene terephthalate thus prepared and an equivalent amount by weight of polybutylene adipate (PBA) having a molecular weight of 1850 were mixed for 1 hour at 240°C under nitrogen. The polyester mixture consequently contained 1207 meq reactive end groups per kg.

Subsequently, per 100 g of polyester-ester 16,7 g of diphenylmethane-4,4'-diisocyanate (MDI) were added, followed by continued stirring for 30 minutes at 230°C.

The results are given in the table below.

Tabel I

| | | |
|---|---|---|
| weight ratio | PBTP/PBA | 50/50 |
| | Tg (°C) | -14/+7 |
| | $Tm_p$ (°C) | 99 |
| | $S_{(p)}$ (°C) | 99 |
| | ΔH (J/g) | 15,5 |
| | $P_{(s)}$ (N/cm) | 31 |
| | IS (mPa) | 152 |
| | Hardness (Shore D) | 41 |

The results in the above table clearly show that the polyester-ester urethane prepared in accordance with the United States patent specification does not qualify for being used in adhesive compositions because of the high degree of transesterification due to non-deactivation of the transesterification catalyst.

Example I

The starting material in this example was a polybutylene adipate having a molecular weight of 1850. The polybutylene terephthalate was prepared in the same manner as indicated in the comparative example, with the exception that the catalyst used consisted of 1700 ppm of tetrabutyl titanate and the polycondensation reaction was continued until a molecular weight of 16 000 was obtained. The polybutylene terephthalate (PBTP) was mixed with polybutylene adipate in a ratio of 1:9 at a temperature of 240°C. After the reaction mixture had turned clear, it was transesterified at 240°C. Subsequently, PEE (diethyl carbethoxy methyl phosphonate) was added in an amount of 5000 ppm, calculated on PBTP, followed by mixing for 30 minutes at 240°C. Next, 14 parts of MDI were added per 100 parts of polyester and mixing was continued for 30 minutes at 240°C.
The results of the measurement on a sample of the various polymer properties are given in the table below.

Table II

| | | |
|---|---|---|
| Polymer weight ratio | PBTP/PBA | 10/90 |
| | Tg (°C) | -36/-18 |
| | $Tm_p$ (°C) | 193 |
| | $S_{(p)}$ (°C) | 80 |
| | ΔH (J/g) | 34 |
| | $P_{(s)}$ (N/cm) | 26 |
| | Hardness (Shore D) | 28 |
| | IS (mPa) | 300 |

The data mentioned in the above table clearly show that the polyester-ester urethane is perfectly suitable to be used in adhesives that are to be applied hot in the molten state.

Example II

The experiment of Example I was repeated in such a way that per 15 parts of molten PBTP (molecular weight 16 000; deactivated with 3000 ppm PEE) 85 parts of PBA (molecular weight 1850) were added. After the reaction mixture had become clear, transesterification was continued for 70 minutes at 240°C, after which 13 parts of MDI were added per 100 parts of polyester. Stirring was continued for 30 minutes at 240°C. The properties measured on a sample of the polymer are given in the table below.

Tabel III

| | | |
|---|---|---|
| Polymer weight ratio | PBTP/PBA | 15/85 |
| | Tg (°C) | -40/-27 |
| | $Tm_p$ | 123 |
| | $S_{(p)}$ (°C) | 95 |
| | ΔH (J/g) | 1,6 |
| | $P_{(s)}$ (N/cm) | 24 |
| | IS (mPa) | 232 |
| | Hardness (Shore D) | 15 |

ACR 1923 R
0159053

Example III

The experiment of Example II was repeated in such a manner that the PBTP/-PBA ratio was 25/75. Per 100 parts of polyester-ester 11,7 parts of MDI were added.

The properties measured on a sample of the polymer are given in the table below.

Tabel IV

| | | |
|---|---|---|
| Polymer weight ratio | PBTP/PBA | 25/75 |
| | Tg (°C) | -43/-30 |
| | $Tm_p$ (°C) | 148 |
| | $S_{(p)}$ (°C) | 138 |
| | ΔH (J/g) | 20,8 |
| | $P_{(s)}$ (N/cm) | 28 |
| | IS (mPa) | 275 |
| | Hardness (Shore D) | 27 |

Example IV

The procedure of Example II was repeated, except that the PBTP/PBA ratio was 37/63. After the reaction mixture had become clear, it was transesterified for 90 minutes at 240°C, after which 9 parts of MDI were added per 100 parts of polyester.

The properties measured on a sample of the polymer are given in the table below.

Tabel V

| | | |
|---|---|---|
| Polymer weight ratio | PBTP/PBA | 37/63 |
| | Tg (°C) | -38/-20 |
| | $Tm_p$ | 149 |
| | $S_{(p)}$ (°C) | 137 |
| | ΔH (J/g) | 14,5 |
| | $P_{(s)}$ (N/cm) | 49 |
| | IS (mPa) | 210 |
| | Hardness (Shore D) | 31 |

Example V

The procedure of Example II was used, with the exception that the starting material was a non-deactivated PBTP having a molecular weight of 10 500. The PBTP/PBA ratio was 50/50. After the reaction mixture had become clear, it was transesterified for another 105 minutes at 240°C, after which 3,2 parts of MDI were added per 100 parts of polyester. Stirring was continued for 30 minutes at 240°C.

The properties measured on a sample of the polymer are given in the table below.

Table VI

| | | |
|---|---|---|
| Polymer weight ratio | PBTP/PBA | 50/50 |
| | Tg (°C) | -25/-14 |
| | $Tm_p$ | 148 |
| | $S_{(p)}$ (°C) | 148 |
| | ΔH (J/g) | 21,7 |
| | $P_{(s)}$ (N/cm) | 23 |
| | IS (mPa) | 338 |
| | Hardness (Shore D) | 39 |

Example VI

The procedure of Example IV was repeated, except that use was made of a non-deactivated PBTP having a molecular weight of 1500 and PBA having a molecular weight of 7350. The PBTP/PBA ratio was 37/63. After the reaction mixture had turned clear, it was transesterified for another 240 minutes at 240°C, after which 9 parts of MDI were added per 100 parts of polyester. Stirring was continued for 30 minutes at 240°C.

The properties measured on a sample of the polymer are given in the table below.

Table VII

| | | |
|---|---|---|
| Polymer weight ratio | PBTP/PBA | 37/63 |
| | Tg (°C) | -41/-24 |
| | $Tm_p$ (°C) | 145 |
| | $S_{(p)}$ (°C) | 135 |
| | ΔH (J/g) | 14,0 |
| | $P_{(s)}$ (N/cm) | 49 |
| | IS (mPa) | 210 |
| | Hardness (Shore D) | 32 |

Example VII

The experiment of Example II was repeated in such a way that per 15 parts of molten PBTP (deactivated with 2000 ppm PEE) 85 parts of polycaprolactone (PCL) [molecular weight 2000] were added. After the reaction mixture had become clear, it was transesterified for another 90 minutes at 240°C, after which per 100 parts of polyester 11,8 parts of MDI were added. Stirring was continued for 45 minutes at 240°C.

The properties measured on a sample of the polymer are given in the table below.

Table VIII

| | | |
|---|---|---|
| Polymer weight ratio | PBTP/PCL | 15/85 |
| | Tg (°C) | -33/-27 |
| | $Tm_p$ (°C) | 165 |
| | $S_{(p)}$ (°C) | 130 |
| | ΔH (J/g) | 21,2 |
| | $P_{(s)}$ (N/cm) | 19 |
| | IS (mPa) | 255 |
| | Hardness (Shore D) | 34 |

Example VIII

The experiment of Example VII was repeated, with the exception that per 15 parts of PBTP of a molecular weight of 23 000 (deactivated with 1500 ppm PEE) 85 parts were added of a copolymer of polyethylene adipate and polybutylene adipate in a weight ratio of 50/50 and of an average molecular weight of 2000. After the reaction mixture had become clear, it was transesterified for 150 minutes at 240°C, after which per 100 parts of polyester 12,3 parts of MDI were added. Subsequently, the mixture was stirred for 45 minutes at 240°C.

The properties measured on a sample of the polymer are given in the table below.

Tabel IX

| | | |
|---|---|---|
| Polymer weight ratio | PBTP (PEA/PBA) | 15/85 |
| | Tg (°C) | -48/-39 |
| | $Tm_p$ (°C) | 175 |
| | $S_{(p)}$ (°C) | 175 |
| | ΔH (J/g) | 3,5 |
| | $P_{(s)}$ (N/cm) | 34 |
| | IS (mPa) | 195 |
| | Hardness (Shore D) | 18 |

Example IX

The experiment of Example VII was repeated, except that per 20 parts of molten PBTP of a molecular weight of 16 000 (deactivated with 2000 ppm PEE) 80 parts of a copolymer of polyethylene adipate and polybutylene adipate were added in a weight ratio of 50/50 and having an average molecular weight of 2000.

The properties measured on a sample of the polymer are given in the table below.

Table X

| | | |
|---|---|---|
| Polymer weight ratio | PBTP/PBA | 20/80 |
| | Tg (°C) | -37/-27 |
| | $Tm_p$ (°C) | 130 |
| | $S_{(p)}$ (°C) | 130 |
| | ΔH (J/g) | 6,9 |
| | $P_{(s)}$ (N/cm) | 42 |
| | IS (mPa) | 222 |
| | Hardness (Shore D) | 20 |

Example X

The procedure of Example VII was repeated, except that per 40 parts of PBTP of a molecular weight of 23 000 (deactivated with 1100 ppm PEE) 60 parts of a copolymer of polyethylene adipate and polybutylene adipate in a weight ratio of 50/50 and of an average molecular weight of 2000 were added. After the reaction mixture had become clear, it was transesterified for 4 hours at 240°C, after which per 100 parts of polyester 9,2 parts of MDI were added. Subsequently, the mixture was stirred for 45 minutes at 240°C.

The properties measured on a sample of the polymer are given in the table below.

Table XI

| | | |
|---|---|---|
| Polymer weight ratio | PBTP/[PEA/PBA] | 40/60 |
| | Tg (°C) | -34/-18 |
| | $Tm_p$ (°C) | 146 |
| | $S_{(p)}$ (°C) | 130 |
| | ΔH (J/g) | 14,8 |
| | $P_{(s)}$ (N/cm) | 47 |
| | IS (mPa) | 275 |
| | Hardness (Shore D) | 38 |

Example XI

The experiment of Example II was repeated in such a way that the polybutylene terephthalate (PBTP) (molecular weight 23.000; prepared with 1700 ppm tetrabutyl titanate) was mixed with 450 ppm PEE for 30 minutes at 240°C, followed by adding an equal amount of polybutylene adipate (molecular weight 1850).

After the reaction mixture had turned clear, it was transesterified for 3 1/2 hours at 240°C. Next, 8,4 parts of MDI were added per 100 parts of polyester and mixing was continued for 45 minutes at 240°C.

Finally, 2000 ppm PEE (calculated on PBTP) were added and mixing was continued for 30 minutes at 240°C.

The properties measured on a sample of the polymer are given in the table below.

Table XII

| | | |
|---|---|---|
| Polymer weight ratio | PBTP/[PEA/PBA] | 50/50 |
| | Tg (°C) | -30/-12 |
| | $Tm_p$ (°C) | 148 |
| | $S_{(p)}$ (°C) | 148 |
| | ΔH (J/g) | 17,4 |
| | $P_{(s)}$ (N/cm) | 65 |
| | IS (mPa) | 334 |
| | Hardness (Shore D) | 43 |

To a sample of the above polymer and to a sample of the Comparative Example prepared in accordance with Example 13 of United States Patent Specification 4 186 257 there were added for stabilizing purposes 1 part of Tinuvin 327®, 1 part of Stabaxol P® and 1 part of Irganox 1010® per 100 parts of polyesteresterurethane, followed by mixing for 30 minutes at 240°C under nitrogen.

Subsequently, both samples were mixed for 2 hours at 240°C in an air atmosphere.

The results of the measurements on both samples of the various polymer properties are given in the table below.

Table XIII

| Polymer | | Comparative Example | Example XI |
|---|---|---|---|
| weight ratio | PBTP/PBA | 50/50 | 50/50 |
| | Tg (°C) | -14/+7 | -30/-12 |
| | $Tm_p$ (°C) | 93 | 148 |
| | $S_{(p)}$ (°C) | 93 | 148 |
| | $P_{(s)}$ (N/cm) | 24 | 55 |
| | IS (mPa) | 75 | 265 |

The data mentioned in the above table clearly show that the polyester-ester urethane according to the prior art has properties which are inferior to those of the polyester-ester urethane according to the invention and that the latter is perfectly suitable to be used in adhesives that are to be applied hot in the molten state.

ACR 1923 R
0159053

CLAIMS

1. A polyester-ester urethane built up of polyester-ester units which are linked together by low molecular weight structural units of the formula

$$R_1[NH\overset{\overset{O}{\|}}{C}]-_p,$$

wherein $R_1$ represents a polyfunctional organic group having not more than 30 carbon atoms, and p is an integer of 2 or 3, which polyester-ester units are built up of blocks comprising a multiple of ester units of the formula

$$-OGO\overset{\overset{O}{\|}}{C}R_2\overset{\overset{O}{\|}}{C}-$$

and blocks comprising a multiple of ester units which may form a bifunctional polyester or polyester amide having a melting point not higher than 100°C, which two types of polyester units are linked together by ester bonds, with the proviso that:
at least 80 mole % of the G groups in the latter formula are tetramethylene radicals and the remaining proportion thereof are divalent radicals left after removal of hydroxyl groups from a low molecular weight diol having a molecular weight not higher than 250; at least 80 mole % of the $R_2$ groups are 1,4-phenylene radicals and the remaining proportion thereof are divalent radicals left after removal of carboxyl groups from a low molecular weight dicarboxylic acid having a molecular weight not higher than 300; and the sum of the percentages of G groups which are not tetramethylene radicals and of the percentage of $R_2$ groups which are not 1,4-phenylene radicals does not exceed 20, characterized in that the ester units of the formula

$$-OGO\overset{\overset{O}{\|}}{C}R_2\overset{\overset{O}{\|}}{C}-$$

form 5 to 60% by weight of the polyester-ester, and the number of interlinked ester units of the formula

$$-OGO\overset{\overset{O}{\|}}{C}R_2\overset{\overset{O}{\|}}{C}-$$

and the number of other ester units interlinked to form a bifunctional polyester or polyester amide are such that at a load of 500 g and a bonding area of 1,5 $cm^2$ on a standard stainless steel plate of AFERA® the softening point determined in accordance with ASTM D 816 is at least 75°C, the melting heat of the polyester segments in the polyester-ester urethane is not higher than 35 joule/g polyester-ester urethane, and the upper limit of the glass transition range [$Tg_{(e)}$] of the low-melting polyster segment is below -5°C, and the melting point of the polyester-ester urethane when the ester units of the formula

$$-OGO\overset{O}{\overset{\|}{C}}R_2\overset{O}{\overset{\|}{C}}-$$

form 20 to 60% by weight of the polyester-ester is in the range of 80° to 150°C and when they form less than 20% by weight of the polyester-ester it is at least 80°C.

2. A polyester-ester urethane according to claim 1, characterized in that the upper limit of the glass transition range [$Tg_{(e)}$] of the low-melting polyester block is -10°C.

3. A polyester-ester urethane according to claim 1, characterized in that the proportion of low molecular weight structural units of the formula

$$R_1[NH\overset{O}{\overset{\|}{C}}]-_p,$$

calculated as diphenyl methane-4,4'-diisocyanate (MDI) and based on the polyester-ester urethane is in the range of 0,5 to 12,5% by weight.

4. A polyester-ester urethane according to claim 2, characterized in that the weight percentage of the low molecular weight structural units of the formula

$$R_1[NH\overset{O}{\overset{\|}{C}}]-_p$$

is in the range of 1 to 10.

5. A polyester-ester urethane according to one or more of the preceding claims, characterized in that the ester units of the formula

$$-OGO\overset{O}{\overset{\|}{C}}R_2\overset{O}{\overset{\|}{C}}-$$

are substantially derived from polybutylene terephthalate.

6. A polyester-ester urethane according to one or more of the preceding claims, characterized in that the ester units that may form a bifunctional polyester or polyester amide having a melting point not higher than 100°C are entirely or substantially derived from polybutylene adipate.

7. A polyester-ester urethane according to one or more of the claims 1-4, characterized in that the ester units that may form a bifunctional polyester or polyester amide having a melting point not higher than 100°C are entirely or substantially derived from polycaprolactone.

8. A polyester-ester urethane according to one or more of the claims 1-4, characterized in that the ester units which may form a bifunctional polyester or polyester amide with a melting point not higher than 100°C are derived from a random copolymer of 40 to 60 parts of polyethylene adipate and 60 to 40 parts of polybutylene adipate.

9. A process for the preparation of a polyester-ester urethane according to one or more of the preceding claims, in which process a bifunctional polyester having a molecular weight of at least 1000 and built up of ester units of the formula

$$-OGO\overset{O}{\overset{\|}{C}}R_2\overset{O}{\overset{\|}{C}}-$$

wherein both G and $R_2$ have the same meaning as indicated before, is reacted, while in the molten phase, with a bifunctional polyester or polyester amide having a molecular weight of at least 1000 and a melting point not higher than 100°C, after which the resulting polyester-ester is reacted with a low moleculair weight coupling agent of the formula

$R_1[NCO]_p$, wherein $R_1$ and p have the meaning given in claim 1, in an amount such that the ratio of the number of -NCO groups to the number of functional groups of the polyester-ester is at least 1,0 and not higher than 5, characterized in that before and/or during the preparation of the polyester-ester the transesterification catalyst present in one or in both polyesters or polyesteramides is entirely or partly deactivated.

10. A process for the preparation of a polyester-ester urethane according to claim 9, characterized in that use is made of a low-melting bifunctional polyester or polyester amide having a molecular weight of 1500 to 2500 and a high-melting polyester of the formula

$$-OGO\overset{O}{\overset{\|}{C}}R_2\overset{O}{\overset{\|}{C}}-$$

having a molecular weight in the range of 10 000 to 25 000.

11. A process according to claim 10, characterized in that the high-melting polyester consists of polybutylene terephthalate having a molecular weight in the range of 15 000 to 19 000.

12. A process according to one or more of the claims 9-11, characterized in that the deactivation is carried out by incorporating a complexing phosphorus compound into one or both polyesters.

13. A process according to claim 12, characterized in that the amount of phosphorus compound used for the deactivation corresponds to at least 0,5 phosphorus atoms per metal atom of the transesterification catalyst.

14. A process according to claim 12, characterized in that amount of phosphorus compound used for the deactivation corresponds to at least 1 to 5 phosphorus atoms per metal atom of the transesterification catalyst.

15. A process according to one or more of the claims 12-14, characterized in that the phosphorus compound used is diethyl carbethoxymethyl phosphonate.

ACR 1923 R
0159053

16. A process according to one or more of the claims 12-14, characterized in that the phosphorus compound used is tris(triethylene glycol)phosphate.

17. A process according to one or more of the claims 12-16, characterized in that the preparation of the polyester-ester is carried out at a temperature between the melting point of the highest melting compound and 260°C.

18. A process for the preparation of a polyester-ester urethane in which the ester units of the formula

$$-OGO\overset{O}{\overset{\|}{C}}R_2\overset{O}{\overset{\|}{C}}-$$

form 20 to 60% by weight of the polyester-ester urethane according to one or more of the claims 1-7, in which process a bifunctional polyster having a molecular weight of at least 1000 and built up of ester units of the formula

$$-OGO\overset{O}{\overset{\|}{C}}R_2\overset{O}{\overset{\|}{C}}-$$

wherein both G and $R_2$ have the same meaning as indicated in claim 1, is reacted, while in the molten phase, with a bifunctional polyester or polyester amide having a molecular weight of at least 1000 and a melting point not higher than 100°C, after which the resulting polyester-ester is reacted with a low molecular weight coupling agent of the formula $R_1[NCO]_p$, wherein $R_1$ and p have the meaning given in claim 1, in an amount such that the ratio of the number of -NCO groups to the number of functional groups of the polyester-ester is at least 1,0 and not higher than 5, characterized in that the number of end groups of the high-melting polyester and of the low-melting polyester added together is higher than 700 meq, but not higher than 1000 meq per kg.

19. A process according to claim 18, characterized in that the number of end groups of the high-melting polyester and the low-melting polyester or polyester amide added together is in the range of 750 to 850 meq per kg.

20. A process for the preparation of a polyester-ester urethane in which the ester units of the formula

$$-OGO\overset{\overset{O}{\|}}{C}R_2\overset{\overset{O}{\|}}{C}-$$

form 5 to less than 20% by weight of the polyester-ester according to one or more of the claims 1-7, in which process a bifunctional polyester having a molecular weight of at least 1000 and built up of ester units of the formula

$$-OGO\overset{\overset{O}{\|}}{C}R_2\overset{\overset{O}{\|}}{C}-$$

wherein both G and $R_2$ have the same meaning as indicated in claim 1, is reacted, while in the molten phase, with a bifunctional polyester or polyester amide having a molecular weight of at least 1000 and a melting point not higher than 100°C, after which the resulting polyester-ester is reacted with a low molecular weight coupling agent of the formula $R_1[NCO]_p$, wherein $R_1$ and p have the meaning given in claim 1, in an amount such that the ratio between the number of -NCO groups and functional groups of the polyester-ester is at least 1,0, but not higher than 5, characterized in that the number of end groups of the high-melting polyester and of the low-melting polyester added together is in the range of 150 to 1000 meq per kg.

European Patent Office

# EUROPEAN SEARCH REPORT

0159053
Application number
EP 85 20 0302

| Category | DOCUMENTS CONSIDERED TO BE RELEVANT<br>Citation of document with indication, where appropriate, of relevant passages | Relevant to claim | CLASSIFICATION OF THE APPLICATION (Int Cl 4) |
|---|---|---|---|
| Y | FR-A-2 380 308 (BAYER)<br>* Pages 35-38, claims 1,3-5; page 8, lines 3-15; page 9, lines 9-18; pages 29 and 30, example 13 * & US - A - 4 186 257 (Cat. D)<br>--- | 1-20 | C 08 G 18/42<br>C 08 G 18/60<br>C 09 J 3/16 |
| Y | EP-A-0 013 461 (AKZO)<br>* Pages 24-26, claims 1-7, 11-13, 17-18; page 2, line 4 - page 3, line 32; page 6, lines 9-30; page 10, lines 11-19; page 11, lines 33-38; pages 22,23, examples 7,8 *<br>--- | 1-20 | |
| A | US-A-4 102 868 (R.A. GENETTI et al.)<br>* Columns 17-19, claims 1,19,30-34; column 5, line 67 - column 6, line 62 *<br>--- | 1 | TECHNICAL FIELDS SEARCHED (Int Cl 4) |
| D,P<br>X | EP-A-0 102 115 (AKZO)<br>(published 07-03-1984)<br>* Pages 29-33, claims 1-15; page 9, lines 10-21 *<br>--- | 1-17 | C 08 G<br>C 09 J |
| A | DE-A-2 543 631 (TEIJIN)<br>----- | | |

The present search report has been drawn up for all claims

| Place of search | Date of completion of the search | Examiner |
|---|---|---|
| THE HAGUE | 27-06-1985 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document